# EUROPÄISCHE PATENTSCHRIFT

(11) **EP 1 426 311 B1**
(45) Veröffentlichungstag und Bekanntmachung des Hinweises auf die Patenterteilung: **25.05.2005**
(21) Anmeldenummer: 03024738.1
(22) Anmeldetag: 29.10.2003
(51) Int. Cl.: B65G 17/06, B65G 39/09

(54) **Transportband**
Conveyor belt
Bande transporteuse

(30) Priorität: 05.12.2002 DE 10256742
(43) Veröffentlichungstag der Anmeldung: 09.06.2004
(73) Patentinhaber: Freiberger Lebensmittel GmbH & Co. Produktions- und Vertriebs KG, 13439 Berlin (DE)
(72) Erfinder: Dolski, Eberhard, 14476 Seeburg (DE)
(74) Vertreter: Dimmerling, Heinz, Dipl.-Ing.

(56) Entgegenhaltungen:
- FR-A- 2 054 431
- GB-A- 661 993
- GB-A- 704 250
- NL-C- 1 005 979

## Beschreibung

Die Erfindung betrifft ein Transportband nach dem Oberbegriff des Anspruchs 1, insbesondere zum Transport von Backgut durch einen Backofen, mit einem über Umlenkwalzen umgelenkten Gurt, welcher miteinander verbundene Drahtelemente aufweist, welche Ösen haben, welche Öffnungen der Drahtelemente (2) bilden, durch welche sich Querstäbe (8) erstrecken, welche Gelenke der Drahtelemente (2) bilden, und der Gurt (1) in Transportrichtung zu einer Kette gelenkig miteinander verbundene Zuglaschen aufweist.

Ein derartiges Transportband ist im Stand der Technik bekannt und wird beispielsweise zum Transport von fladenförmigen Teigwaren durch einen Backofen verwendet. Der Gurt besteht hierbei aus einem engmaschigen beziehungsweise geschlossenen Drahtgeflecht, welches weder in Transportrichtung noch quer zur Transportrichtung auf Zug beanspruchbar ist.

Der Gurt ist auf quer zur Transportrichtung verlaufende Traversen angeordnet, welche mit ihren Enden an zwei in Transportrichtung verlaufende Antriebsketten befestigt sind. Die Antriebsketten sind auf in einem Abstand von etwa zehn Zentimetern angeordneten Stützrollen abgestützt.

Das bekannte Transportband hat den Nachteil, daß es bauartbedingt ein sehr hohes Gewicht hat, welches insbesondere bei der Wartung oder Reparatur des Transportbandes ein großes Problem darstellt. Des weiteren ist die große Anzahl der in den Antriebsketten vorhandenen Kugellager ein großes Problem. Denn dadurch, daß die Antriebsketten auch durch den Backofen geführt werden, unterliegen sie einem dauemden, stark schwankenden Temperatureinfluß, der sich sehr nachteilig auf die Lebensdauer der Kugellager auswirkt. Es ist somit häufig erforderlich, die Kugellager auszuwechseln.

Des weiteren hat das bekannte Transportband den Nachteil, daß die Schmiermittel der Kugellager durch die hohe Temperatur im Backofen verdampfen. Einerseits wird hierdurch die Lebensdauer der Kugellager herabgesetzt, andererseits sind die verdampfenden Schmiermittel in Bezug auf die Lebensmittel nachteilig. Darüber hinaus hat das bekannte Transportband den Nachteil, daß das Drahtgeflecht sehr engmaschig beziehungsweise geschlossen ausgeführt ist, wodurch die Wärmeübertragung von der Energiequelle zum Backgut behindert wird. Dies wirkt sich nachteilig auf die zum Backen benötigte Energie aus.

Aus der NL-C-1 005 979 ist ein Transportband mit den Merkmalen des Oberbegriffs des Anspruchs 1 bekannt. Der Druckschrift lassen sich jedoch keine Angaben über die Ausgestaltung der Umlenkwalzen entnehmen.

Ein Transportband mit den Merkmalen des Oberbegriffs des Anspruchs 1 ist des weiteren aus der FR-A-2 054 431 bekannt, wobei die Zuglaschen Teile einer Antriebskette sind. Angaben über die Ausgestaltung der Umlenklaschen lassen sich der Druckschrift nicht entnehmen.

Es ist Aufgabe der Erfindung, ein eingangs genanntes Transportband derart auszubilden, daß es verbesserte Lauf- und Verschleißeigenschaften und eine bessere Wärmeübertragung von der Energiequelle zum Backgut hat.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung ist ein Transportband, insbesondere zum Transport von Backgut durch einen Backofen, mit einem über Umlenkwalzen umgelenkten Gurt, welcher miteinander verbundene Drahtelemente aufweist, dadurch gekennzeichnet, daß der Gurt in Transportrichtung zu einer Kette gelenkig miteinander verbundene Zuglaschen aufweist, mittels der der Gurt antreibbar ist.

Dadurch, daß der Gurt in Transportrichtung zu einer Kette miteinander verbundene Zuglaschen aufweist, läßt sich der Gurt selbsttragend ausbilden. Durch die durch die Zuglaschen gebildete Ketten wird einerseits das Gewicht des Gurtes abgefangen und läßt sich andererseits der Gurt antreiben. Hierdurch kann in vorteilhafter Weise auf die aus Antriebsketten und dazwischen verlaufenden Traversen gebildete relativ schwere Trägeranordnung verzichtet werden. Statt einen relativ leichten Gurt auf einer schweren Trägeranordnung anzuordnen besteht bei dem erfindungsgemäßen Transportband der Gurt aus einem leichten, grobmaschigen aber dennoch stabilen Drahtelementeverbund, welcher weder zum Antrieb noch zum Tragen besondere Elemente benötigt.

Besonders vorteilhaft bei dem erfindungsgemäßen Transportband ist, daß keine schweren Antriebsketten mehr erforderlich sind. Die Gewichtsverringerung wirkt sich sehr vorteilhaft bei Wartungsarbeiten aus. Darüber hinaus wird durch das Entfallen der Vielzahl von Kugellagern in den Antriebsketten auch noch erreicht, daß durch schadhafte Kugellager bedingte Störungen nahezu vollständig entfallen. Es sind somit auch weniger Wartungsarbeiten erforderlich.

Besonders vorteilhaft ist eine Ausführungsform der Erfindung, bei der die Drahtelemente Drahtbügel sind, welche auf Zug beanspruchbar ausgebildet und gelenkig miteinander verbunden sind. Hierdurch wird in vorteilhafter Weise erreicht, daß die miteinander verbundenen Drahtelemente nicht nur durch die Zuglaschen-Ketten getragen werden. Der Drahtelementeverbund selbst übernimmt einen großen Teil der Tragkräfte. Die Zuglaschen-Ketten und der Drahtelementeverbund können so ausgebildet sein, daß sich die Tragkräfte gleichmäßig verteilen. Jedoch könnte der Drahtelementeverbund auch selbsttragend ausgebildet sein.

Dadurch, daß der Drahtelementeverbund aus gelenkig miteinander verbundenen Drahtbügel besteht, kann des weiteren einerseits ein Gurt gebildet werden, welcher relativ grobmaschig ist, wodurch eine sehr gute Wärmeübertragung von der Energiequelle zum Backgut gewährleistet ist. Andererseits wird durch die miteinander verbundenen Drahtbügel ein Gurt gebildet, der sehr stabil ist und dennoch eine hohe Flexibilität aufweist.

Als sehr vorteilhaft hat sich eine Ausführungsform der Erfindung herausgestellt, bei der die Zuglaschen gelenkig miteinander verbundene Blechlaschen sind. Hierdurch kann auf einfache Weise eine sehr stabile Zuglaschen-Kette mit sehr geringem Gewicht gebildet werden.

Bei einer besonderen Ausführungsform der Erfindung ist vorgesehen, daß die Gelenke der Zuglaschen und die Gelenke der Drahtelemente durch Querstäbe gebildet werden, welche sich durch Öffnungen erstrecken, welche in den Zuglaschen beziehungsweise den Drahtelementen ausgebildet sind. Derart ausgebildete Gelenke lassen sich einerseits sehr einfach herstellen und sind andererseits dennoch robust. Darüber hinaus lassen sich mittels derartig ausgebildeter Gelenke die Drahtelemente mit den Zuglaschen sehr einfach und stabil miteinander verbinden, wodurch ein sehr guter Ausgleich der in die Zuglaschen-Ketten und den Drahtelementeverbund eingeleiteten Zugkräfte erreicht wird.

Besonders vorteilhaft ist es, wenn wenigstens drei Zuglaschen-Ketten vorhanden sind, wobei zwei der Zuglaschen-Ketten im Randbereich des Gurtes angeordnet sind und eine Zuglaschen-Kette in der Mitte des Gurtes angeordnet ist. Hierdurch läßt sich das Gewicht des Drahtelementeverbundes sehr gut verteilen.

Besonders vorteilhaft ist es, wenn die Drahtelemente Hervorstehungen aufweisen, welche in in den Umlenkwalzen angeordnete Ausnehmungen eingreifen. Hierdurch läßt sich der Gurt auf einfache Weise und zuverlässig antreiben.

Besonders vorteilhaft bei einer derartigen Ausführungsform ist es, wenn die Hervorstehungen durch Ösen gebildet werden, welche die Öffnungen der Drahtelemente bilden. Hierdurch ist es nicht erforderlich, daß die Drahtelemente beziehungsweise der Gurt mit besonderen Elementen versehen werden, mittels welcher die Antriebskräfte in den Gurt eingeleitet werden. Des weiteren ist eine derartige Einleitung von Kräften in den Gurt sehr stabil, so daß auch größere Kräfte in den Gurt einleitbar sind. Des weiteren wird die Kraft zum Antreiben des Gurtes an einen Ort in den Gurt eingeleitet, an dem sich Gelenke der Drahtelemente befinden. Dies wirkt sich sehr günstig auf die Kraftübertragung aus.

Zum Antreiben des Gurtes können auch wie Zahnräder ausgebildete Scheiben dienen, welche an der Stelle der Umlenkwalzen angeordnet sind, an denen sich die Zuglaschen-Ketten befinden. Die Zähne der Scheiben greifen an den sich durch die Öffnungen der Zuglaschen erstreckenden Querstäbe an. Hierbei ist es vorteilhaft, wenn an diesen Stellen auf den Querstäben Buchsen drehbar angeordnet sind.

Bei einer weiteren Ausführungsform der Erfindung ist vorgesehen, daß zwischen den Umlenkwalzen Stützwellen angeordnet sind, auf welchen der Drahtelementeverbund abgestützt ist. Durch die Stützwellen, welche in einem Abstand von etwa einem Meter zueinander angeordnet sind, wird erreicht, daß der Gurt nahezu nicht durchhängen kann, so daß auf eine sehr hohe Spannung des Gurtes verzichtet werden kann.

Besonders vorteilhaft bei der letztgenannten Ausführungsform ist es, wenn die Stützwellen als Hohlwellen ausgebildet sind, welche mittels im Inneren der Hohlwellen angeordneter wärmebeständiger, wartungsfreier und vollständig gekapselter Kugellager drehbar befestigt sind. Dadurch, daß die Kugellager im Inneren von Hohlwellen angeordnet sein können, sind sie sehr gut gegenüber äußeren Einflüssen abgeschirmt. Ein weiterer Vorteil ist, daß die Hohlwellen sich ständig am selben Ort befinden, so daß die Kugellager keinen großen Temperaturschwankungen ausgesetzt sind. Die durch hohe Temperaturschwankungen vorhandene Materialbelastung entfällt daher vollständig.

Sehr vorteilhaft ist es auch, wenn die Kugeln der Kugellager in Kohlekäfigen angeordnet sind. Dies hat sich insbesondere bei den im Backofen herrschenden höheren Temperaturen als vorteilhaft herausgestellt. Eine weitere Verbesserung kann auch dadurch erreicht werden, daß die Kugellager zusätzlich von außen abgedeckt sind. Auch dies wirkt sich sehr vorteilhaft auf die Lebensdauer der Kugellager aus.

Als sehr vorteilhaft hat sich auch eine Ausführungsform der Erfindung herausgestellt, bei der wenigstens eine der Stützwellen wenigstens an einer Seite eine Anlaufschräge aufweist. Durch die Anlaufschräge wird auf einfache Weise eine Zentrierung des Gurtes erreicht.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt
- Figur 1: einen Endabschnitt eines erfindungsgemäß ausgebildeten Transportbandes in perspektivischer Darstellung,
- Figur 2: einen Abschnitt eines erfindungsgemäß ausgebildeten Gurtes in der Draufsicht,
- Figur 3: eine Umlenkwalze von der Seite, und
- Figur 4: eine Stützwelle.

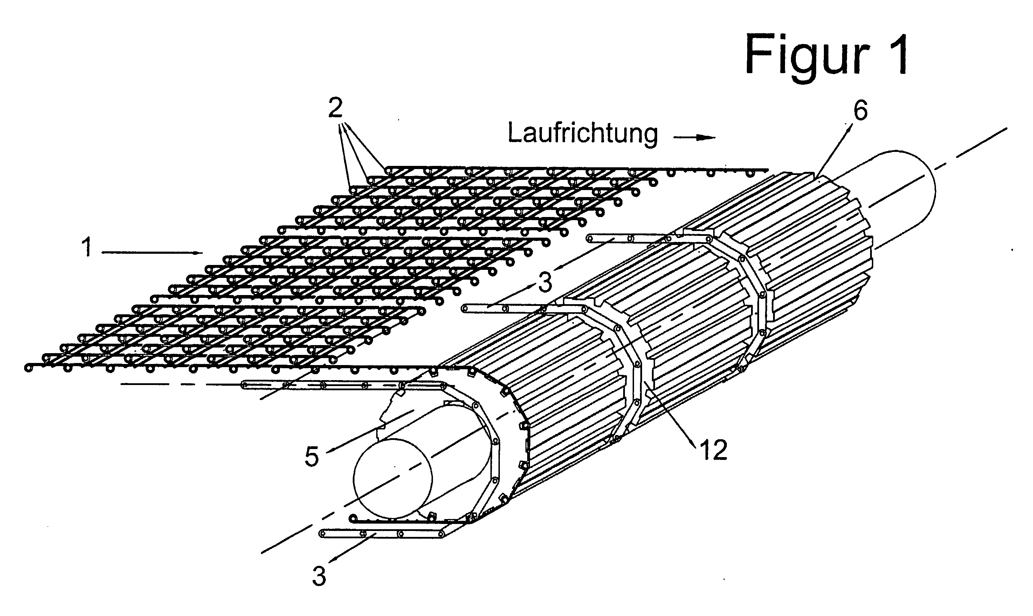

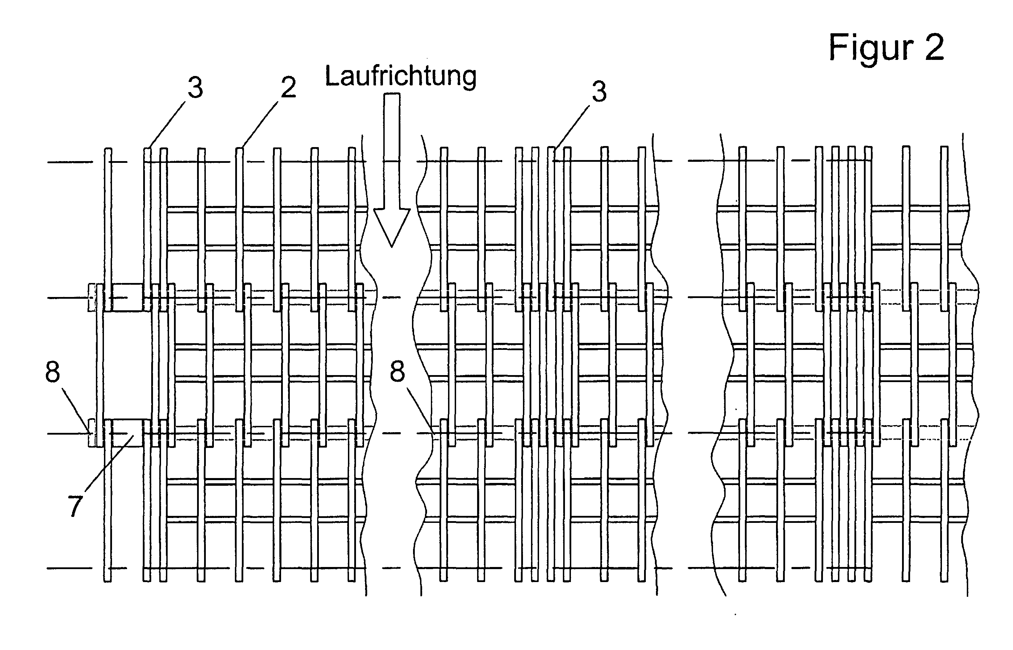

Wie Figur 1 entnommen werden kann, wird ein Gurt 1 eines Transportbandes um eine Umlenkwalze 5 umgelenkt. Der Gurt 1 weist als Drahtbügel 2 ausgebildete Drahtelemente auf, welche durch Ösen gebildete Öffnungen haben. Wie insbesondere Figur 2 entnommen werden kann, sind die Drahtbügel 2 dadurch miteinander verbunden, daß sich durch die Öffnungen Querstäbe 8 erstrecken.

Der Gurt 1 weist des weiteren aus Blechlaschen 3 gebildete Zuglaschen auf, welche zu Ketten miteinander verbunden sind. Bei der in Figur 1 dargestellten Ausführungsform befinden sich an den beiden äußeren Enden des Gurtes 1 jeweils eine Zuglaschen-Kette sowie im Inneren des Gurtes 1 zwei Zuglaschen-Ketten. Die Zuglaschen-Ketten weisen etwa den gleichen Abstand zueinander auf.

Da, wie insbesondere Figur 2 entnommen werden kann, die Querstäbe 8 sich auch durch die Öffnungen der Blechlaschen 3 erstrecken, sind einerseits die Blechlaschen 3 zu einer Kette miteinander verbunden, und andererseits die Zuglaschen-Ketten mit dem Drahtbügelverbund. Im Bereich der Blechlaschen 3 sind auf den Querstäben 8 drehbar Hülsen 7 angeordnet.

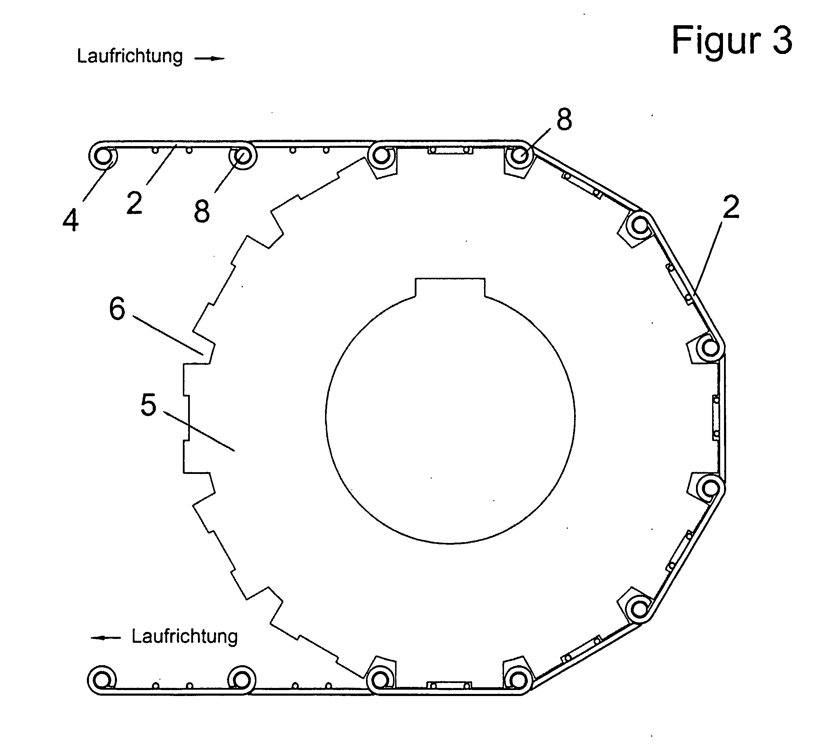

Wie insbesondere auch Figur 3 entnommen werden kann, sind in den Umlenkwalzen 5 Ausnehmungen 6 angeordnet, welche sich an der Oberfläche der Umlenkwalzen 5 in axialer Richtung erstrecken. In die Ausnehmungen 6 greifen als Ösen ausgebildete Hervorstehungen 4 der Drahtbügel 2 ein. Hierdurch kann die Umlenkwalze 5 auf den Gurt 1 Antriebskräfte ausüben.

Wie Figur 1 zu entnehmen ist, weist die Umlenkwalze 5 ringnutenförmige Vertiefungen 12 auf, in welche die Zuglaschen-Ketten eingreifen. In den Vertiefungen 12 können in Figur 1 nicht dargestellte zahnradförmige Scheiben angeordnet sein, deren Zähne an den auf den Querstäben 8 angeordnete Hülsen 7 angreifen. Hierdurch wird auf die Zuglaschen-Ketten 7 eine Antriebskraft ausgeübt.

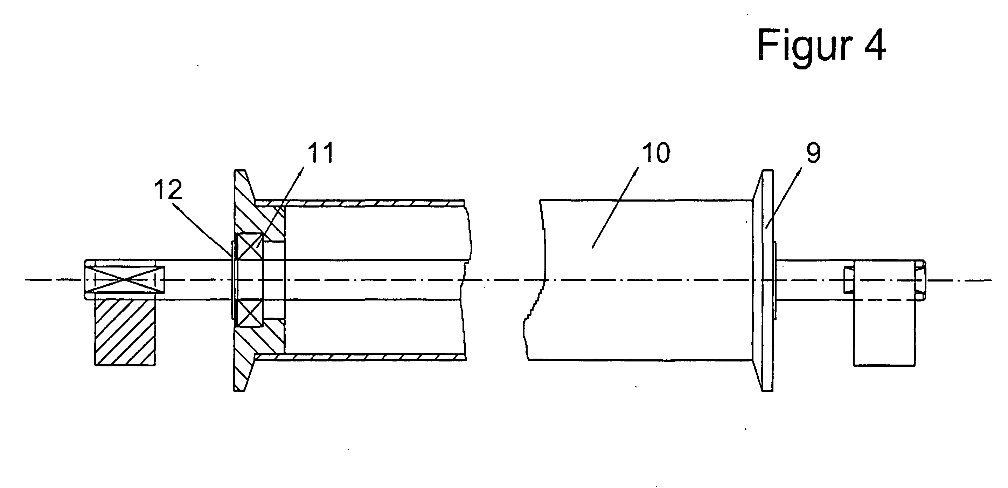

Zwischen den sich an beiden Enden des Transportbandes befindlichen Umlenkwalzen 5 sind in einem Abstand von etwa einem Meter als Hohlwellen ausgebildete Stützwellen 10 angeordnet, deren Aufbau Figur 4 entnommen werden kann. Die Stützwellen 10 weisen in ihrem Inneren an beiden Seiten Kugellager 11 auf, welche wärmebeständig, wartungsfrei und vollständig gekapselt sind. Die Kugellager 11 sind in Kohlekäfigen angeordnet und zusätzlich von außen durch eine Abdeckung 12 abgedeckt. Zur Begrenzung des Gurtes 1 weisen die Stützwellen 10 an beiden Seiten Flansche 9 auf, welche eine Anlaufschräge darstellen. Hierdurch wird der Gurt 1 zentriert.

## Patentansprüche

1. Transportband, insbesondere zum Transport von Backgut durch einen Backofen, mit einem über Umlenkwalzen (5) umgelenkten Gurt (1), welcher miteinander verbundene Drahtelemente (2) aufweist, welche Ösen haben, welche Öffnungen der Drahtelemente (2) bilden, durch welche sich Querstäbe (8) erstrecken, welche Gelenke der Drahtelemente (2) bilden, und der Gurt (1) in Transportrichtung zu einer Kette gelenkig miteinander verbundene Zuglaschen (3) aufweist,
**dadurch gekennzeichnet,**
**daß** der Gurt (1) mittels der Zuglaschen (3) antreibbar ist, sowie daß die Drahtelemente (2) Hervorstehungen (4) aufweisen, welche durch die Ösen gebildet werden, welche in in den Umlenkwalzen (5) angeordnete Ausnehmungen (6) eingreifen.

2. Transportband nach Anspruch 1,
**dadurch gekennzeichnet,**
**daß** die Drahtelemente (2) Drahtbügel sind, welche auf Zug beanspruchbar ausgebildet und gelenkig miteinander verbunden sind.

3. Transportband nach Anspruch 1 oder 2,
**dadurch gekennzeichnet,**
**daß** die Zuglaschen (3) gelenkig miteinander verbundene Blechlaschen (3) sind.

4. Transportband nach einem der Ansprüche 1 bis 3,
**dadurch gekennzeichnet,**
**daß** die Gelenke der Zuglaschen (3) und die Gelenke der Drahtelemente (2) durch die Querstäbe (8) gebildet werden, welche sich auch durch Öffnungen erstrecken, welche in den Zuglaschen (3) ausgebildet sind.

5. Transportband nach einem der Ansprüche 1 bis 4,
**dadurch gekennzeichnet,**
**daß** wenigstens drei Zuglaschen-Ketten vorhanden sind.

6. Transportband nach einem der Ansprüche 1 bis 5,
daß zwischen den Umlenkwalzen (5) Stützwellen (10) angeordnet sind, auf welchen der Gurt (1) abgestützt ist.

7. Transportband nach Anspruch 6,
**dadurch gekennzeichnet,**
**daß** die Stützwellen (10) als Hohlwellen ausgebildet sind, welche mittels im Inneren der Hohlwellen angeordneter wärmebeständiger, wartungsfreier und vollständig gekapselter Kugellager (11) drehbar befestigt sind.

8. Transportband nach Anspruch 7,
**dadurch gekennzeichnet,**
**daß** die Kugeln der Kugellager (11) in Kohlekäfigen angeordnet sind.

9. Transportband nach Anspruch 7 oder 8,
**dadurch gekennzeichnet,**
**daß** die Kugellager (11) zusätzlich von außen abgedeckt sind.

10. Transportband nach einem der Ansprüche 7 bis 9,
**dadurch gekennzeichnet,**
**daß** wenigstens eine der Stützwellen (10) wenigstens an einer Seite eine Anlauf schräge (9) aufweist.

## Claims

1. Conveyor belt, in particular for transporting baked goods through a baking oven, having a belt (1) deflected over deflection rollers (5), said belt having mutually linked wire elements (2) having eyes forming openings of the wire elements (2) through which extend transverse rods (8) comprising joints of the wire elements (2), and the belt (1) has pulling straps (3) mutually linked in articulating manner in the transport direction to form a chain, **characterised in that** the belt (1) is drivable by means of the pulling straps (3) and that the wire elements (2) have projections (4) formed by the eyes, which engage in recesses (6) arranged in the deflection rollers (5).

2. Conveyor belt according to claim 1, **characterised in that** the wire elements (2) are wire ties designed to be tensionally loadable and mutually linked in articulating manner.

3. Conveyor belt according to claim 1 or 2, **characterised in that** the pulling straps (3) are sheet metal straps (3) mutually linked in articulating manner.

4. Conveyor belt according to one of the claims 1 to 3, **characterised in that** the joints of the pulling straps (3) and the joints of the wire elements (2) are formed by the transverse rods (8) which also extend through openings formed in the pulling straps (3).

5. Conveyor belt according to one of the claims 1 to 4, **characterised in that** at least three pulling strap chains are present.

6. Conveyor belt according to one of the claims 1 to 5, **characterised in that** between the deflection rollers (5) are arranged support shafts (10) on which the belt (1) is supported.

7. Conveyor belt according to claim 6, **characterised in that** the support shafts (10) are formed as hollow shafts which are rotatably fixed by means of heat-resistant, maintenance-free and completely encapsulated ball bearings (11) arranged in the interior of the hollow shafts.

8. Conveyor belt according to claim 7, **characterised in that** the balls of the ball bearings (11) are arranged in carbon cages.

9. Conveyor belt according to claim 7 or 8, **characterised in that** the ball bearings (11) are additionally covered over from outside.

10. Conveyor belt according to one of the claims 7 to 9, **characterised in that** at least one of the support shafts (10) has a shoulder slope (9) on at least one side.

## Revendications

1. Bande transporteuse notamment pour transporter des aliments à faire cuire au four à travers un four, comprenant une courroie (1) passant sur des rouleaux de renvoi (5) et présentant des éléments en fil métallique (2) reliés entre eux et dotés d'oeillets formant des ouvertures des éléments en fil métallique (2) à travers lesquelles s'étendent des tiges transversales (8) qui forment des articulations des éléments en fil métallique (2), la courroie (1) présentant dans la direction de transport des languettes de traction (3) reliées entre elles de manière articulée de façon à former une chaîne, **caractérisée en ce que** la courroie (1) peut être entraînée au moyen des languettes de traction (3), et **en ce que** les éléments en fil métallique (2) présentent des saillies (4) formées par les oeillets, qui se mettent en prise dans des évidements (6) ménagés dans les rouleaux de renvoi (5).

2. Bande transporteuse selon la revendication 1, **caractérisée en ce que** les éléments en fil métallique (2) sont des étriers en fil métallique qui sont conçus de façon à pouvoir être soumis à des efforts de traction et qui sont reliés entre eux de façon articulée.

3. Bande transporteuse selon la revendication 1 ou 2, **caractérisée en ce que** les languettes de traction (3) sont des languettes de tôle (3) reliées entre elles de façon articulée.

4. Bande transporteuse selon l'une des revendications 1 à 3, **caractérisée en ce que** les articulations des languettes de traction (3) et les articulations des éléments en fil métallique (2) sont formées par les tiges transversales (8) qui s'étendent aussi à travers des ouvertures ménagées dans les languettes de traction (3).

5. Bande transporteuse selon l'une des revendications 1 à 4, **caractérisée en ce qu'**au moins trois chaînes de languettes de traction sont présentes.

6. Bande transporteuse selon l'une des revendications 1 à 5, **caractérisée en ce qu'**entre les rouleaux de renvoi (5) sont disposés des arbres d'appui (10) sur lesquels la courroie (1) prend appui.

7. Bande transporteuse selon la revendication 6, **caractérisée en ce que** les arbres d'appui (10) sont réalisés en tant qu'arbres creux qui sont fixés de façon rotative au moyen de roulements à billes (11) résistants à la chaleur, sans entretien et entièrement fermés, disposés à l'intérieur des arbres creux.

8. Bande transporteuse selon la revendication 7, **caractérisée en ce que** les billes des roulements à billes (11) sont disposées dans des cages au carbone.

9. Bande transporteuse selon la revendication 7 ou 8, **caractérisée en ce que** les roulements à billes (11) sont en outre recouverts de l'extérieur.

10. Bande transporteuse selon l'une des revendications 7 à 9, **caractérisée en ce qu'**au moins l'un des arbres d'appui (10) présente une rampe de butée (9) au moins d'un côté.
